Europäisches Patentamt

European Patent Office

Office européen des brevets

(11) Publication number: **0 312 933 B1**

## EUROPEAN PATENT SPECIFICATION

(45) Date of publication of patent specification: **04.08.93**

(51) Int. Cl.⁵: **C03C 3/064**, C03C 3/118, C03C 13/04

(21) Application number: **88117125.0**

(22) Date of filing: **14.10.88**

(54) Fluoroborosilicate glass and clad article.

(30) Priority: **22.10.87 US 111217**

(43) Date of publication of application:
**26.04.89 Bulletin 89/17**

(45) Publication of the grant of the patent:
**04.08.93 Bulletin 93/31**

(84) Designated Contracting States:
**DE FR GB NL**

(56) References cited:
**DE-A- 3 524 605**
**GB-A- 2 051 773**
**US-A- 2 407 874**
**US-A- 3 764 354**
**US-A- 3 784 386**

(73) Proprietor: **Corning Glass Works**
**Sullivan Park FR-212**
**Corning New York 14831(US)**

(72) Inventor: **Fine, Gerald Jonathan**
**23 West Sixth Street**
**Corning New York(US)**

(74) Representative: **Reinhard, Skuhra, Weise**
**Friedrichstrasse 31**
**W-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

## Description

### Introduction

This invention is concerned with fluoroborosilicate glasses having physical properties that particularly adapt them to use as cladding glasses for clad glass fibers. A specific application is the production of fiber optic bundles for use as optical elements in night vision equipment.

These fiber optic bundles are composed of clad fibers having a high numerical aperture (N.A.), desirably at least one. Numerical aperture is a function of the refractive indices of two glasses employed as core and cladding glasses in an optical fiber. It is defined by the equation

$$\text{N.A.} = \sqrt{N_1^2 - N_2^2}$$

where $N_1$ and $N_2$ are the refractive indices of the core and cladding glasses, respectively.

It is immediately apparent that, in order to obtain a high numerical aperture, glasses having widely divergent refractive indices must be employed. However, consideration must also be given to a number of other physical properties as well. Thus, to form a strong clad fiber, free from such flaws as cracks, striae, crystals and seeds, the core and cladding glasses must be compatible during sealing, redrawing and cooling steps. This means that consideration must be given to such properties as coefficient of thermal expansion, glass softness point, and phase separation tendency.

It has been the practice, heretofore, to produce fiber optic bundles for night vision equipment by a multiple step process. A suitable core glass is cast into circular bars, and a cladding glass is drawn as tubing. A bar is then placed inside a length of tubing, and the glasses are redrawn as clad cane. This clad cane is packed into new bundles with other pieces of clad cane and redrawn again. After the redraw step is repeated a number of times, the resulting bundles are cut and polished on either end. They are then used as either faceplates or inverters (after twisting 180°) in night vision goggles.

Glass requirements are stringent. In addition to a high numerical aperture, it is desirable, but not critical, that the glasses have relatively similar viscosities, generally about $10^4$-$10^6$ poises, at an appropriate redraw temperature. The relative thermal expansions of each glass must be compatible with forming as clad cane. Finally, the glasses must not be susceptible to devitrification, or reaction with each other, during redraw.

### Purposes

One purpose of the invention is to simplify the rather tedious procedure heretofore used in forming fiber optic bundles.

Another purpose is to provide cladding glasses having properties such that clad fibers can be drawn directly from adjacent glass melts.

A further purpose is to provide a family of fluoroborosilicate cladding glasses that are compatible with lead silicate core glasses having high refractive indices.

A still further purpose is to provide fiber optic fibers having a numerical aperture equal to or greater than one.

Yet another purpose is to provide a family of fluoroborosilicate glasses having a unique combination of properties including a refractive index not over 1.45, a linear coefficient of thermal expansion over the temperature range of 25°-300°C of not over $120 \times 10^{-7}/°C$, a softening point below 600°C., and a viscosity at the liquidus of not under 40,000 poises.

### Summary of the Invention

In furtherance of these and other apparent purposes, an aspect of my invention is a family of fluoroborosilicate glasses having compositions which, in weight percent, consist essentially of 35 - 52% $SiO_2$, 12 - 23% $Al_2O_3$, the $SiO_2$ + $Al_2O_3$ being at least 53%, 10 - 19% $B_2O_3$, 15 - 19% $K_2O$, the $B_2O_3$ + $Al_2O_3$ being not over 36%, and containing by analysis 7 - 12% F, the glasses having refractive indices not over about 1.45 and linear coefficients of thermal expansion not over about $120 \times 10^{-7}/°C$. The glass compositions preferably consist of these constituents, but may contain up to about 5% of certain other oxides in some instances. These may include up to 5% alkaline earth metal oxides (RO) and up to 5% $Na_2O$. However, $Li_2O$, and refractory oxides such as $ZrO_2$, should be avoided.

In another aspect, my invention is a clad fiber having a numerical aperture greater than one, and wherein the cladding glass is a fluoroborosilicate having a composition that, in weight percent, consists

2

essentially of 35 - 52% $SiO_2$, 12 - 23% $Al_2O_3$, the $SiO_2$ + $Al_2O_3$ being at least 53%, 10 - 19% $B_2O_3$, 15 - 19% $K_2O$, the $B_2O_3$ + $Al_2O_3$ being not over 36%, and containing by analysis 7 - 12% F, the glass having a refractive index not over about 1.45 and coefficient of thermal expansion not over about 120 x $10^{-7}/^{\circ}C$.

The core glass may be a lead silicate glass having a refractive index of at least 1.76. Lead silicate glasses particularly suitable as core glasses consist essentially of, in percent by weight, 63 - 72% PbO, 28 - 32% $SiO_2$ 0 - 6% 6% BaO, the PbO + BaO content being 68 - 72%, and 0-2% of other oxides such as $As_2O_3$, the glass having a refractive index of 1.76 - 1.78.

The invention further contemplates a night vision device embodying a fiber optic bundle composed of clad fibers wherein the cladding glass is a composition that, in weight percent, consists essentially of 35 - 52% $SiO_2$, 12 - 23% $Al_2O_3$, the $SiO_2$ + $Al_2O_3$ being at least 53%, 10 - 19% $B_2O_3$, 15 - 19% $K_2O$, the $B_2O_3$ + $Al_2O_3$ being not over 36%, and containing by analysis 7 - 12% F, the glass having a refractive index not over about 1.45 and coefficient of thermal expansion not over about 120 x $10^{-7}/^{\circ}C$.

Prior Literature

An article by Fraser and Upton, in the Journal of the American Ceramic Society, 27, 121-128 (1944) and entitled "Optical Fluor-Crown Glasses", reports studies on the effect of composition variations on optical properties of glasses used in optical elements. The composition components varied were silica, alumina, boric oxide, potash and fluorine.

United States Patent No. 2,407,874 (Fraser) discloses fluor-crown optical glasses containing silica, alumina, boric oxide, alkali metal oxide and fluorine.

United States Patent No. 2,433,882 (Armistead) discloses glasses colored green with cobalt and iron halides, containing oxides of silicon, boron, aluminum and sodium and/or potassium, and having a minor addition of fluoride.

United States Patent No. 3,671,380 (Ali et al.) discloses cladding glasses for clad fibers. The cladding glasses have relatively low refractive indices and are composed of $B_2O_3$, $SiO_2$, $Al_2O_3$ and $K_2O$.

United States Patent No. 3,764,354(Ritze) discloses fluoborosilicate glasses having low refractive indices and optical paths independent of temperature. The glasses consist essentially of $SiO_2$, $B_2O_3$, $Al_2O_3$, alkali oxide plus fluoride, $Sb_2O_3$ and additional fluorine.

United States Patent No. 4,102,693 (Owen et al.) discloses photochromic borosilicate glasses having dispersed silver halide crystals and composed of $SiO_2$, $B_2O_3$,$Al_2O_3$ and alkali metal oxide ($R_2O$).

General Description

The present invention arose from a search for cladding and core glasses having compatible properties that would enable their being drawn directly from melts as clad fiber having a numerical aperture of at least one.

Such a drawing process is sometimes referred to as a double crucible, or double orifice, drawing process. It is referred to, for example, in connection with resistor cane production in United States Patent No. 3,437,974 (Spiegler). It is illustrated in United States Patent No. 3,209,641 (Upton), and, in somewhat more complex, double clad tubing production, in United States Patent No. 4,023,953 (Megles, Jr. et al.).

Briefly, in simple form, a core glass may be melted in, or transferred in molten form to, a cylindrical chamber having a drawing orifice. This chamber is surrounded by a second, concentric, cylindrical, chamber wall spaced from the first chamber. The cladding glass is melted in, or transferred to, this second chamber which also has a drawing orifice concentric with and surrounding the first orifice. The two glasses are allowed to flow out simultaneously and unite to form the desired clad cane as drawn.

The properties required in my new cladding glasses for drawing as clad cane are: 1) similarity in viscosity to a usable core glass over a wide range of temperatures, 2) low liquidus temperature and high viscosity at the liquidus temperature, 3) low refractive index, and 4) thermal expansion compatible with typical high lead silicate glasses.

A tubing glass, available from Corning Glass Works under Corning Code 7052 and heretofore used as cladding, has a refractive index of about 1.48. However, that index requires a core glass with a refractive index of at least 1.79 to provide a N.A. of one. Glasses having such high indices are known, but do not generally lend themselves to drawing as fiber or cane. Also, such glasses tend to have expansion and viscosity characteristics that negate compatibility in clad articles.

A number of glass systems have relatively low refractive indices, but are subject to other deficiencies. Borate glasses are notorious for poor durability, as are fluorophosphates. The latter also have high thermal expansion coefficients and low liquidus viscosities. Fused silica is difficult to form even by itself.

The fluoroborosilicate glasses, reported as optical element glasses, looked promising. However, initial melts tended to phase separate and/or exhibit rather high expansion coefficients. I have now found that the several requirements can be met by employing lead silicate glasses as core glasses with a narrowly limited range of fluoroborosilicate cladding glasses.

The lead silicate core glasses generally have refractive indices of at least about 1.76 and thermal expansion coefficients on the order of $75 - 100 \times 10^{-7}/°C$. Glasses having particular utility for present redraw purposes consist essentially of, in weight percent, 63 - 72% PbO, 28 - 32% $SiO_2$, 0 - 6% BaO, the PbO + BaO content being 68 - 72% and 0 - 2% of other oxides; the glass having a refractive index of about 1.76 - 1.78.

My new cladding glasses must meet several requirements. Initially, as previously indicated, a numerical aperture of one requires a large difference in the refractive indices of the core and cladding glasses. For example, a core glass of about 1.77 requires a cladding glass with an index not over about 1.45.

The liquidus of the cladding glass should be at least below the drawing temperature of the core glass. Further, the viscosities of the core and cladding glasses should be reasonably close at the forming or drawing temperature. Thus, it is generally desirable that the two glasses have viscosities of about $10^4$-$10^6$ poises at the drawing temperature.

It is usually considered desirable for the thermal coefficients of expansion of the core and cladding glasses to match, or for that of the cladding glass to be lower. However, I have found that a surprising degree of mismatch may be tolerated, and that the cladding glass may have a coefficient as high as $120 \times 10^{-7}/°C$. The glasses must, of course, not undergo devitrification, or any interaction, during the drawing process.

In accordance with my invention, the several conditions are met with fluoroborosilicate glasses composed, in percent by weight, essentially of 35 - 52% $SiO_2$, 12 - 23% $Al_2O_3$, the $SiO_2$ + $Al_2O_3$ being at least 53%, 10 - 19% $B_2O_3$, 15 - 19% $K_2O$, the $B_2O_3$ + $Al_2O_3$ being not over 36%, and containing by analysis 7 - 12% F.

These composition limits on the several glass components should be observed with reasonable care. Thus, at least 7% fluorine, by analysis, is required to maintain a softening point below 590°C and a low refractive index below 1.45. In general, not more than about 12% can be maintained in the glass, any excess being lost by volatilization. In order to provide analyzed contents of 7 - 12% F, about 10 - 15%, or more, should be incorporated in the glass batch. It will be appreciated, of course, that the amount lost by volatilization will depend somewhat on other constituents, and on melting conditions.

$Al_2O_3$ apparently serves to stabilize the fluorine and maintain it in the glass during melting. However, increasing $Al_2O_3$ hardens the glass and increases the liquidus. Hence, $Al_2O_3$ should not exceed 23%. The total content of $SiO_2$ + $Al_2O_3$ should exceed 53% to restrain the expansion coefficient.

$B_2O_3$ tends to lower the expansion coefficient, as well as soften the glass, but may cause excessive F volatilization. However, with contents below about 10%, the glasses tend to phase separate and become opals. Above 19% $B_2O_3$, F volatilization precludes analyzed F contents above 7%.

$K_2O$ softens the glass, but amounts over about 19% unduly increase the refractive index and the expansion coefficient. Amounts below 15% tend to make the glass too hard.

Specific Examples

The invention is further illustrated with reference to compositions for several cladding glasses as set forth in TABLE I. The compositions are given on an oxide basis, with fluorine being shown separately on an elemental basis. However, it will be appreciated that the fluorine is incorporated in a glass batch as fluorides, e.g., aluminum and/or potassium fluorides, and enters the glass structure in place of oxygen. The compositions are given in parts by weight. Since each composition totals approximately 100, the individual amounts may be taken as percentages by weight.

A glass batch was mixed corresponding to each composition. The batches were melted in covered platinum crucibles for four hours at temperatures varying from 1250 - 1400°C as required for successful melting. The melts were poured into molds to form 6″ x 6″ (15 cm x 15 cm) patties which were annealed. The patties were divided into sections and prepared for measurement of various physical properties. The observed data are also recorded in TABLE I. R.I. represents refractive index. C.T.E. represents coefficient of thermal expansion expressed in terms of $\times 10^{-7}/°C$. S.P. represents softening point in terms of °C. The visual appearance of each sample is also recorded illustrating the absence of devitrification or opalization.

4

TABLE I

| | 1 | 2 | 3 | 4 | 5 | 6 |
|---|---|---|---|---|---|---|
| $SiO_2$ | 43.0 | 46.7 | 42.8 | 36.8 | 49.1 | 42.2 |
| $Al_2O_3$ | 15.5 | 15.0 | 19.6 | 21.7 | 12.5 | 12.4 |
| $B_2O_3$ | 15.5 | 15.0 | 11.3 | 15.5 | 12.5 | 18.5 |
| $K_2O$ | 15.8 | 15.3 | 15.8 | 15.8 | 17.8 | 17.5 |
| F (anal.) | 10.1 | 8.0 | 10.3 | 10.1 | 8.0 | 9.3 |
| R.I. | 1.44 | 1.45 | 1.45 | 1.45 | 1.45 | 1.45 |
| C.T.E. | 120 | 104 | 112 | 111 | 107 | 118 |
| S.P. | 552 | 592 | 585 | 539 | 591 | 580 |
| Appearance | clear | clear | clear | clear | clear | clear |

By way of illustrating how small deviations in composition outside the prescribed limits can alter properties, compositions and properties for six additional comparative glasses are shown in TABLE II below.

TABLE II

| | 7 | 8 | 9 | 10 | 11 | 12 |
|---|---|---|---|---|---|---|
| $SiO_2$ | 41.6 | 39.7 | 32.7 | 40.6 | 36.4 | 44.0 |
| $Al_2O_3$ | 15.0 | 16.3 | 25.8 | 18.8 | 18.7 | 16.3 |
| $B_2O_3$ | 13.0 | 14.1 | 15.5 | 18.8 | 18.7 | 9.8 |
| $K_2O$ | 20.3 | 16.6 | 15.8 | 13.5 | 17.7 | 16.6 |
| F (anal.) | 10.3 | 13.2 | 10.1 | 8.3 | 8.5 | 13.2 |
| R.I. | 1.45 | 1.43 | - | 1.46 | 1.45 | - |
| C.T.E. | 132 | 145 | - | 90 | 123 | - |
| S.P. | 554 | 517 | - | 612 | 528 | - |
| Appearance | clear | clear | opal | clear | clear | opal |

TABLE III sets forth compositions for two glasses particularly suitable for core glasses. Also given are physical properties for the glasses.

TABLE III

| | 13 | 14 |
|---|---|---|
| $SiO_2$ | 30.5 | 29.8 |
| PbO | 63.7 | 70.1 |
| BaO | 5.6 | 0.0 |
| $As_2O_3$ | 0.2 | 0.2 |
| S.P.(°C) | 605 | 576 |
| Anneal Pt.(°C) | 473 | 450 |
| Strain Pt.(°C) | 437 | 416 |
| CTE (x $10^{-7}$/°C) | 75 | 73 |
| Refract. Ind. | 1.77 | 1.77 |
| Viscosity at the Liquidus (Poises) | 50,000 | 40,000 |

Clad fiber was produced by melting core and cladding glasses in a double crucible apparatus generally similar to that illustrated in the Upton patent mentioned earlier. A lead silicate glass having the composition of Example 13 in TABLE III was melted in the inner chamber. The cladding glass was melted in the outer chamber, and had the composition shown in TABLE I as Example 2. The drawing temperature for the clad fiber was about 820°C.

The higher expansion coefficient of the cladding glass presented the potential problem of cracking. Accordingly, the ratio of core diameter to cladding thickness was varied during the run. Since a ratio of 16:1 was specified for product purposes, the ratio was set initially somewhat higher at 20:1. When no cracking or

EP 0 312 933 B1

other defect was observed, the ratio was increased to 25:1. At this ratio some cracking was observed. This confirms that an expansion mismatch can be tolerated, but that it is desirable to minimize it if other requirements permit. No reaction at the interface between the glasses was observed.

**Claims**

1. A fluoroborosilicate glass having a composition, in weight percent, consisting essentially of 35 - 52% $SiO_2$, 12 - 23% $Al_2O_3$, the $SiO_2$ + $Al_2O_3$ being at least 53%, 10 - 19% $B_2O_3$, 15 - 19% $K_2O$, the $B_2O_3$ + $Al_2O_3$ being not over 36 %, and containing by analysis 7 - 12 % F.

2. A fluoroborosilicate glass in accordance with claim 1 further containing up to 5 % $Na_2O$.

3. A fluoroborosilicate glass in accordance with claim 1 consisting essentially of 46.7% $SiO_2$, 15.0% $B_2O_3$, 15.0% $Al_2O_3$, 15.3% $K_2O$ and 8% F.

4. The use of a fluoroborosilicate glass, having a composition in accordance with claim 1, as a cladding glass.

5. The use of a fluoroborosilicate glass as a cladding glass in accordance with claim 4 wherein the glass has a refractive index no over about 1.45 and a coeffizient of thermal expansion over the temperature range of 25°C-300°C of not over $120 \times 10^{-7}/°C$.

6. The use of a fluoroborosilicate cladding glass in accordance with claims 4 or 5 further containing up to 5% $Na_2O$.

7. The use of a fluoroborosilicate cladding glass in accordance with claims 4 or 5 consisting essentially of 46.7% $SiO_2$, 15.0% $B_2O_3$, 15.0% $Al_2O_3$, 15.3 $K_2O$ and 8% F.

8. A clad glass fiber wherein the cladding glass composition consists essentially of 35 - 52% $SiO_2$, 12 - 23% $Al_2O_3$, the $SiO_2$ + $Al_2O_3$ being at least 53%, 10 - 19 $B_2O_3$, the $B_2O_3$ + $Al_2O_3$ being not over 36%, 15 - 19% $K_2O$ and 7 - 12% analyzed F.

9. A clad glass fiber according to claim 8 having a numerical aperture of at least one, and being composed of a fluoroborosilicate cladding glass having a refractive index of not over about 1.45 and a lead silicate core glass having a coefficient of thermal expansion of at least $75 \times 10^{-7}/°C$, the coefficient of thermal expansion of the cladding glass being not more than $30 \times 10^{-7}/°C$ greater than that of the core glass, and the ratio of the core glass diameter to the thickness of the cladding glass being not over about 20:1.

10. A clad glass fiber in accordance with claim 8 wherein the core glass has a composition consisting essentially of, in percent by weight, 63 - 72% PbO, 28 - 32% $SiO_2$ and 0 - 6% BaO, the total content of PbO + BaO being 68 - 72 %.

11. A clad glass fiber in accordance with claim 8 wherein the core glass has a refractive index of 1.76 - 1.78.

12. A clad glass fiber in accordance with claim 8 wherein the core glass has a coefficient of thermal expansion of 75 - 100 x $10^{-7}/°C$ and the cladding glass has a coefficient of 90 - 120 x $10^{-7}/°C$.

13. Use of a cladding glass according to one or more of the claims 4 - 7 for a night vision device embodying a plurality of clad glass fibers bonded together in a bundle, each clad glass fiber being composed of a core glass and a cladding glass, the numerical aperture of the clad fiber being at least one.

**Patentansprüche**

1. Fluorborsilicatglas mit einer Zusammensetzung, ausgedrückt in Gewichtsprozenten, bestehend im wesentlichen aus 35-52 % $SiO_2$, 12-23 % $Al_2O_3$, wobei der Anteil $SiO_2$ + $Al_2O_3$ wenigstens 53 %

6

beträgt, 10-19 % $B_2O_3$, 15-19 % $K_2O$, wobei der Anteil $B_2O_3$ + $Al_2O_3$ nicht mehr als 36 % beträgt, und, ermittelt durch Analyse, 7-12 % F.

2. Fluorborsilicatglas nach Anspruch 1, welches weiterhin bis zu 5 % $Na_2O$ enthält.

3. Fluorborsilicatglas nach Anspruch 1, bestehend im wesentlichen aus 46,7 % $SiO_2$, 15,0 % $B_2O_3$, 15,0 % $Al_2O_3$, 15,3 % $K_2O$ und 8 % F.

4. Verwendung eines Fluorborsilicatglases mit einer Zusammensetzung nach Anspruch 1 als ein Ummantelungsglas.

5. Verwendung eines Fluorborsilicatglases als ein Ummantelungsglas nach Anspruch 4, wobei das Glas einen Brechungsindex von nicht mehr als etwa 1,45 und einen Wärmeausdehnungskoeffizienten über den Temperaturbereich von 25°-300°C von nicht mehr als 120 x $10^{-7}$/°C aufweist.

6. Verwendung eines Fluorborsilicatummantelungsglases nach einem der Ansprüche 4 oder 5, enthaltend weiterhin bis zu 5 % $Na_2O$.

7. Verwendung eines Fluorborsilicatummantelungsglases nach einem der Ansprüche 4 oder 5, bestehend im wesentlichen aus 46,7 % $SiO_2$, 15,0 % $B_2O_3$, 15,0 % $Al_2O_3$, 15,3 % $K_2O$ und 8 % F.

8. Mantelglasfaser, wobei die Ummantelungsglaszusammensetzung im wesentlichen aus 35-52 % $SiO_2$, 12-23 % $Al_2O_3$, wobei der Anteil $SiO_2$ + $Al_2O_3$ wenigstens 53 % beträgt, 10-19 % $B_2O_3$, wobei der Anteil $B_2O_3$ + $Al_2O_3$ nicht mehr als 36 % beträgt, 15-19 % $K_2O$ und 7-12 % analysiertes F besteht.

9. Mantelglasfaser nach Anpruch 8 mit einer numerischen Apertur von wenigstens eins und einer Zusammensetzung aus einem Fluorborsilicatummantelungsglas mit einem Brechungsindex von nicht mehr als etwa 1,45 und einem Bleisilicatkernglas mit einem Wärmeausdehnungskoeffizienten von wenigstens 75 x $10^{-7}$/°C, wobei der Wärmeausdehnungskoeffizient des Ummantelungsglases nicht mehr als 30 x $10^{-7}$/°C größer ist als der des Kernglases, und das Verhältnis des Kernglasdurchmessers zur Dicke des Ummantelungsglases nicht mehr als etwa 20 : 1 beträgt.

10. Mantelglasfaser nach Anspruch 8, wobei das Kernglas eine Zusammensetzung aufweist, bestehend im wesentlichen, ausgedrückt in Gewichtsprozenten, aus 63-72 % PbO, 28-32 % $SiO_2$ und 0-6 % BaO, wobei der Gesamtgehalt an PbO + BaO 68-72 % beträgt.

11. Mantelglasfaser nach Anspruch 8, wobei das Kernglas einen Brechungsindex von 1,76 - 1,78 aufweist.

12. Mantelglasfaser nach Anspruch 8, wobei das Kernglas einen Wärmeausdehnungskoeffizienten von 75-100 x $10^{-7}$/°C und das Ummantelungsglas einen Koeffizienten von 90-120 x $10^{-7}$/°C aufweist.

13. Verwendung eines Ummantelungsglases nach einem oder mehreren der Ansprüche 4 - 7 für eine Nachtsichtvorrichtung, verwirklicht durch eine Vielzahl von Mantelglasfasern, die in einem Bündel zusammengebunden sind, wobei jede Mantelglasfaser aus einem Kernglas und einem Ummantelungsglas zusammengesetzt ist und die numerische Apertur der Mantelfaser wenigstens eins beträgt.

**Revendications**

1. Verre au fluoroborosilicate dont la composition pondérale est essentiellement de 35 à 52 % de $SiO_2$, 12 à 23 % d'$Al_2O_3$ la teneur en $SiO_2$ + $Al_2O_3$ étant d'au moins 53 %, 10 à 19 % de $B_2O_3$, 15 à 19 % de $K_2O$, la teneur en $B_2O_3$ + $Al_2O_3$ n'étant pas supérieure à 36 %, et contenant à l'analyse 7 à 12 % de F.

2. Verre au fluoroborosilicate selon la revendication 1, contenant en outre jusqu'à 5 % de $Na_2O$.

3. Verre au fluoroborosilicate selon la revendication 1, essentiellement constitué de 46,7 % de $SiO_2$, 15,0 % de $B_2O_3$, 15,0 % d'$Al_2O_3$, 15,3 % de $K_2O$ et 8 % de F.

**4.** Utilisation d'un verre au fluoroborosilicate ayant une composition selon la revendication 1, comme verre de placage.

**5.** Utilisation d'un verre au fluoroborosilicate comme verre de placage selon la revendication 4, dans laquelle le verre a un indice de réfraction non supérieur à environ 1,45 et un coefficient de dilatation thermique non supérieur à 120 x $10^{-7}$/°C, dans l'intervalle de températures compris entre 25°C et 300°C.

**6.** Utilisation d'un verre de placage au fluoroborosilicate selon la revendication 4 ou 5 contenant en outre jusqu'à 5 % de $Na_2O$.

**7.** Utilisation d'un verre de placage au fluoroborosilicate selon la revendication 4 ou 5, essentiellement constitué de 46,7 % de $SiO_2$, 15,0 % de $B_2O_3$, 15,0 % d'$Al_2O_3$, 15,3 % de $K_2O$ et 8 % de F.

**8.** Fibre de verre plaquée dans laquelle le verre de placage contient essentiellement 35 à 52 % de $SiO_2$, 12 à 23 % d'$Al_2O_3$, la teneur en $SiO_2$ + $Al_2O_3$ étant d'au moins 53 %, 10 à 19 % de $B_2O_3$, la teneur en $B_2O_3$ + $Al_2O_3$ n'étant pas supérieure à 36 %, 15 à 19 % de $K_2O$ et 7 à 12 % de F à l'analyse.

**9.** Fibre de verre plaquée selon la revendication 8, ayant une ouverture numérique d'au moins un et composée d'un verre de placage au fluoroborosilicate ayant un indice de réfraction non supérieur à environ 1,45 et d'un verre de noyau au silicate de plomb ayant un coefficient de dilatation thermique d'au moins 75 x $10^{-7}$/°C, le coefficient de dilatation thermique du verre de placage n'étant pas supérieur de plus de 30 x $10^{-7}$/°C à celui du verre de noyau, et le rapport du diamètre du verre de noyau à l'épaisseur du verre de placage n'étant pas supérieur à environ 20:1.

**10.** Fibre de verre plaquée selon la revendication 8, dans laquelle le verre de noyau est essentiellement constitué, en pourcentage pondéral, de 63 à 72 % de PbO, 28 à 32 % de $SiO_2$ et 0 à 6 % de BaO, la teneur totale en PbO + BaO étant de 68 à 72 %.

**11.** Fibre de verre plaquée selon la revendication 8, dans laquelle le verre de noyau a un indice de réfraction de 1,76-1,78.

**12.** Fibre de verre plaquée selon la revendication 8, dans laquelle le verre de noyau a un coefficient de dilatation thermique de 75-100 x $10^{-7}$/°C et le verre de placage a un coefficient de 90-120 x $10^{-7}$/°C.

**13.** Utilisation d'un verre de placage selon l'une ou plusieurs des revendications 4 à 7, pour un dispositif de vision nocturne contenant plusieurs fibres de verre plaquées liées entre elles en faisceau, chaque fibre de verre plaquée étant composée d'un verre de noyau et d'un verre de placage, l'ouverture numérique de la fibre plaquée étant d'au moins un.